(19) Europäisches Patentamt
European Patent Office
Office européen des brevets

(11) **EP 4 756 218 A1**

(12) **EUROPEAN PATENT APPLICATION**
published in accordance with Art. 153(4) EPC

(43) Date of publication:
**10.06.2026 Bulletin 2026/24**

(21) Application number: **24848223.4**

(22) Date of filing: **29.07.2024**

(51) International Patent Classification (IPC):
**F03D 17/00** (2016.01)

(52) Cooperative Patent Classification (CPC):
**F03D 7/00; F03D 17/00**

(86) International application number:
**PCT/CN2024/108133**

(87) International publication number:
**WO 2025/026268 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023 CN 202310953423**

(71) Applicants:
• **Goldwind Pioneer Technology (Yancheng) Co.,
Ltd.
Yancheng, Jiangsu 224001 (CN)**

• **Beijing Goldwind Science & Creation
Windpower Equipment Co. Ltd.
Beijing 100176 (CN)**

(72) Inventors:
• **ZHOU, Jingwei
Beijing 100176 (CN)**
• **ZHAI, Endi
Beijing 100176 (CN)**
• **SHI, Qizhong
Beijing 100176 (CN)**

(74) Representative: **Hoffmann Eitle
Patent- und Rechtsanwälte PartmbB
Arabellastraße 30
81925 München (DE)**

(54) **METHOD, APPARATUS AND DEVICE FOR DETERMINING PITCH OF WIND TURBINE BLADE**

(57)    A method for determining the pitch of a wind turbine blade. A first sensor (501) is provided on a blade root of a wind turbine, and at least one second sensor (502) is provided on a blade. The method comprises: obtaining a parameter of the current operating condition of a wind turbine, a first angular velocity collected by the first sensor (501) and at least one second angular velocity collected by the at least one second sensor (502); and, on the basis of target simulated blade pitch data, the first angular velocity and the at least one second angular velocity, determining first blade pitch data of the wind turbine, the first blade pitch data being used for representing the blade pitch of the wind turbine under the current operating condition, and the target simulated blade pitch data being matched with the parameter of the current operating condition. Thus, by means of the plurality of sensors mounted on the wind turbine blade and on the basis of the simulated blade pitch data corresponding to the current operating condition combined with the angular velocities collected by the sensors, the method reckons the blade pitch data capable of accurately reflecting the pitch of the wind turbine blade, allowing for more accurate and intelligent control on wind turbines. In addition, the present application further relates to an apparatus and device for determining the pitch of a wind turbine blade.

**FIG. 3**

## Description

The present application claims priority to Chinese Patent Application No.CN202310953423.4, titled "METHOD, APPARATUS AND DEVICE FOR DETERMINING PITCH OF WIND TURBINE BLADE", filed on July 31, 2023 with the China National Intellectual Property Administration, which is incorporated herein by reference in its entirety.

## FIELD

The present disclosure relates to the technical field of wind power generation, and in particular to a method, an apparatus and a device for determining a blade posture of a wind turbine.

## BACKGROUND

As equipment for wind power generation, wind turbines are often deployed in harsh environments such as mountainous areas, where a blade of the wind turbines is prone to be deformed due to influences such as instantaneous impact caused by strong wind, and in severe cases, failures such as tower strikes are likely to occur. Therefore, accurately determining a blade posture of a wind turbine is crucial for both monitoring and controlling of a wind turbine, and is related to safe operation of the wind turbine.

Currently, a reflective element is generally added inside the blade of the wind turbine and a posture of the wind turbine is determined by laser reflection and image recognition. However, since the wind turbine has a slender cavity structure, the reflective element cannot be mounted at a blade tip of the wind turbine. Therefore, it is difficult to obtain deformation at the blade tip of the wind turbine, that is, the blade posture of the wind turbine cannot be accurately determined.

## SUMMARY

A method, an apparatus, and a device for determining a blade posture of a wind turbine are provided according to the present disclosure, and thus a posture of a wind turbine blade can be accurately determined, providing an accurate basis for safe control of the wind turbine.

In a first aspect, a method for determining a blade posture of a wind turbine is provided according to the present disclosure. A first sensor is arranged on a blade root of the wind turbine, and at least one second sensor is arranged on a blade of the wind turbine. The method includes:

obtaining an operating-condition parameter of a current operating condition of the wind turbine, a first angular velocity acquired by the first sensor, and at least one second angular velocity acquired by the at least one second sensor, wherein the operating-condition parameter comprises at least one of: a wind speed, a rotational speed, or a pitch angle; and

determining first blade posture data of the wind turbine based on target simulated blade posture data, the first angular velocity, and the at least one second angular velocity, wherein the first blade posture data represents a blade posture of the wind turbine under the current operating condition, and the target simulated blade posture data corresponds to the operating-condition parameter of the current operating condition.

In a second aspect, a system for determining a blade posture of a wind turbine is provided according to the present disclosure. The system includes a first sensor, at least one second sensor, and a controller. The first sensor is arranged on a blade root of the wind turbine, and the at least one second sensor is arranged on a blade of the wind turbine.

The first sensor is configured to acquire a first angular velocity under a current operating condition of the wind turbine.

The at least one second sensor is configured to acquire at least one second angular velocity under the current operating condition.

The control system is configured to perform the method provided in the first aspect.

Optionally, the system further includes a third sensor, and the third sensor is arranged on a hub of the wind turbine.

The third sensor is configured to acquire a third angular velocity under the current operating condition.

In a third aspect, a controller is provided according to the present disclosure, and the controller includes a processor and a memory.

The memory is configured to store a computer program.

The processor is configured to, based on the computer program, perform the method provided in the first aspect.

In a fourth aspect, a computer-readable storage medium is further provided according to the present disclosure.

The computer-readable storage medium is configured to store a computer program. The computer program is executed to perform the method provided in the first aspect described above.

It can be seen that the present disclosure has following advantages.

The method for determining the blade posture of the wind turbine is provided according to the present disclosure. A first sensor is arranged on a blade root of the wind turbine, and at least one second sensor is arranged on a blade of the wind turbine. The method may include: obtaining an operating-condition parameter of a current operating condition of the wind turbine, a first angular velocity acquired by the first sensor, and at least one second angular velocity acquired by the at least one second sensor, where the operating-condition parameter includes at least one of: a wind speed, a rotational speed, or a pitch angle; and determining first blade posture data of the wind turbine based on target simulated blade posture data, the first angular velocity, and the at least one second angular velocity, where the first blade posture data represents a blade posture of the wind turbine under the current operating condition, and the target simulated blade posture data corresponds to the operating-condition parameter of the current operating condition. Therefore, by mounting multiple sensors on the blade of the wind turbine to acquire angular velocities at multiple points on the blade in real time, the first blade posture data is calculated based on the simulated blade posture data corresponding to the current operating condition in combination with the acquired angular velocities. The first blade posture data can accurately reflect the blade posture of the wind turbine under the current operating condition, solving a problem that the blade posture of the wind turbine cannot be conveniently and accurately determined currently. The accurate blade posture of the wind turbine enables more accurate and intelligent control of the wind turbine, providing a reliable data basis for better control of the wind turbine.

## BRIEF DESCRIPTION OF THE DRAWINGS

In order to more clearly illustrate technical solutions in embodiments of the present disclosure, the drawings to be used in the embodiments are briefly described below. Apparently, the drawings in the following description show only some embodiments of the present disclosure, and other drawings may be obtained by those skilled in the art from the drawings.

FIG. 1 is a schematic diagram of blade deformation and a coordinate system of a wind turbine according to an embodiment of the present disclosure;

FIG. 2 is a schematic diagram of mounted sensors according to an embodiment of the present disclosure;

FIG. 3 is a flowchart of a method for determining a blade posture of a wind turbine according to an embodiment of the present disclosure;

FIG. 4 is a schematic diagram of angular velocities and pitch angles in different coordinate systems according to an embodiment of the present disclosure;

FIG. 5 is a structural diagram of a system for determining a blade posture of a wind turbine according to an embodiment of the present disclosure;

FIG. 6 is a schematic diagram of a wind turbine blade with sensors being mounted in a wired manner according to an embodiment of the present disclosure;

FIG. 7 is a schematic diagram of a wind turbine blade with sensors being in wireless communication according to an embodiment of the present disclosure;

FIG. 8 is a schematic diagram of the method according to an embodiment of the present disclosure being implemented by a blade posture test system 800;

FIG. 9 is a schematic diagram of variation patterns of angular velocities of the gyroscope sensor 1 mounted at the blade root with an azimuth angle on three axes according to an embodiment of the present disclosure; and

FIG. 10 is a schematic diagram of variation patterns of angular velocities of the gyroscope sensor 2 mounted at a blade section with an azimuth angle on three axes according to an embodiment of the present disclosure.

## DETAILED DESCRIPTION

In order to make the above objectives, features and advantages of the present disclosure more apparent and understandable, the embodiments of the present disclosure are described in detail below in conjunction with the drawings and specific examples. It should be understood that the specific embodiments described hereafter are only intended to explain the present disclosure, not to limit the present disclosure. It should be further noted that only parts related to the present disclosure, rather than all structures, are shown in the drawings, for ease of description.

In control of a wind turbine, a blade posture of the wind turbine is obtained, and corresponding control is performed on the wind turbine in response to the blade posture indicating potential failures such as a tower strike, to ensure safe operation of the wind turbine.

In conventional technologies, methods for determining a blade posture of a wind turbine include a first method and a second method. In the first method, a reflective element is added inside a blade and a blade posture is obtained through laser reflection and image recognition. In the second method, a blade posture is obtained through a load sensor and an observation model. That is, by constructing an observation model that can reflect a mapping relationship between a load and a blade structure of the wind turbine, and inputting the load measured by the load sensor into the observation model, the observation model outputs the blade structure, and the blade posture is estimated indirectly. Both methods above have shortcomings. In the first method, since the blade of the wind turbine has a slender cavity structure, and the reflective element cannot be mounted at the middle and tip of the blade, the posture of the blade tip is difficult to obtain, and an overall posture of the blade cannot be accurately obtained. In the second method, since the method relies on the accuracy of the observation model, and the accuracy of the load sensor is instable, the blade posture is difficult to be obtained accurately, and especially is difficult to be obtained accurately under relatively complex deformations.

Based on this, a method for determining a blade posture of a wind turbine is provided according to an embodiment of the present disclosure. In this method, a first sensor is required to be arranged on a blade root of the wind turbine, and at least one second sensor is required to be arranged on a blade of the wind turbine. As an example, the method may include: obtaining an operating-condition parameter of a current operating condition of the wind turbine, a first angular velocity acquired by the first sensor, and at least one second angular velocity acquired by the at least one second sensor, where the operating-condition parameter includes at least one of: a wind speed, a rotational speed, or a pitch angle; and determining first blade posture data of the wind turbine based on target simulated blade posture data, the first angular velocity, and the at least one second angular velocity, where the first blade posture data represents a blade posture of the wind turbine under the current operating condition, and the target simulated blade posture data corresponds to the operating-condition parameter of the current operating condition. As such, by mounting multiple sensors on the blade of the wind turbine to acquire angular velocities at multiple points on the blade in real time, the first blade posture data is calculated based on the simulated blade posture data corresponding to the current operating condition in combination with the acquired angular velocities. The first blade posture data can accurately reflect the blade posture of the wind turbine under the current operating condition, solving a problem that the blade posture of the wind turbine cannot be conveniently and accurately determined currently. The accurate blade posture of the wind turbine enables more accurate and intelligent control of the wind turbine, providing a reliable data basis for better control of the wind turbine.

Furthermore, the method may further include: controlling one or more subsystems of the wind turbine based on the first blade posture data, for example, controlling one or more subsystems of the wind turbine to implement a shutdown operation.

In the embodiments of the present disclosure, based on a kinetic characteristic of a blade-rotor system of the wind turbine, and using the rotor's own rotation and characteristics of a sensor (such as a gyroscope or an inertial navigation sensor) capable of acquiring an angular velocity, it is proposed to identify local coordinates at various sections of a blade by using angular velocities acquired by respective sensors, and calculate data capable of representing the blade posture through resolving. In the embodiments of the present disclosure, mounting positions and a quantity of sensors are specified, providing a reliable measurement method for determining the blade posture of the wind turbine, which helps verify the load and the safety margin of the wind turbine.

To facilitate understanding of the specific implementation of the method for determining a blade posture of a wind turbine according to the embodiments of the present disclosure, description will be made below in conjunction with the accompanying drawings.

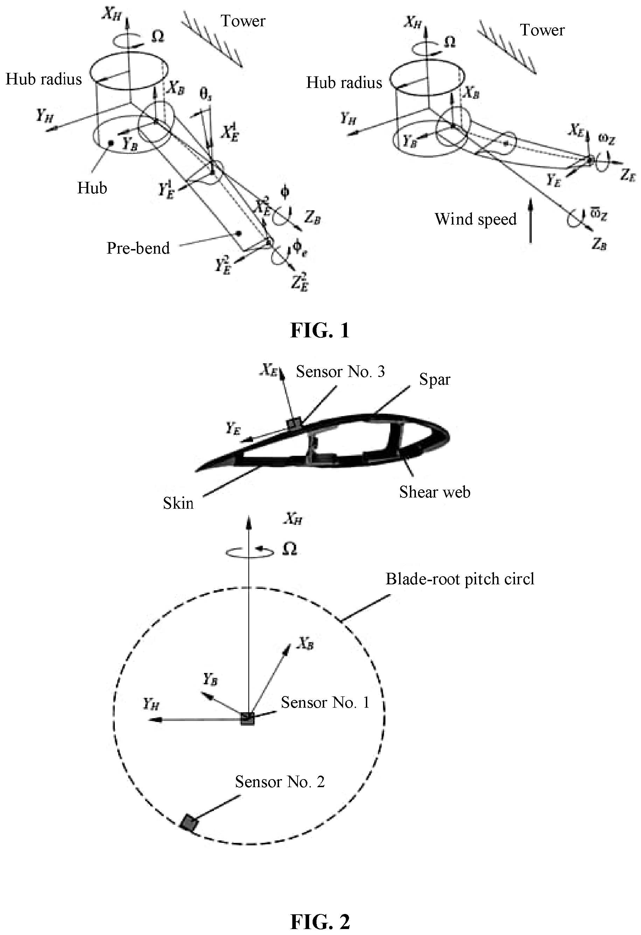

FIG. 1 is a schematic diagram of blade deformation and a coordinate system of a wind turbine. When a blade of the wind turbine is under no-wind load condition, the blade is in a pre-bend state, as shown on the left side of FIG. 1; when the wind turbine is under a certain wind speed and the rotor has a rotational speed $\Omega$, the blade will be subject to flap-wise, edge-wise and torsional deformations, as shown on the right side of FIG. 1. In FIG. 1, a blade-root coordinate system includes an $X_B$ axis, a $Y_B$ axis and a $Z_B$ axis; a hub coordinate system includes an $X_H$ axis, a $Y_H$ axis and a $Z_H$ axis; a blade-section coordinate system (also referred to as an element coordinate system) includes an $X_E$ axis, a $Y_E$ axis and a $Z_E$ axis. The pre-bend state may be understood as an arrangement where, when the blade is stationary, a neutral axis is in the flap-wise direction and away from a pitching line, which is intended to increase tower clearance and reduce the risk of the blade colliding with the tower after deformation. The pitching line may be understood as a straight line from a center point of a blade-root pitch circle towards a blade side, which is perpendicular to a blade pitch plane, where a direction from a blade root to a blade tip is a positive direction. Clearance may be understood as a distance between a certain section of the blade and a tower wall when the blade is in a deformed state. The flap-wise direction may be understood as a direction perpendicular to a rotor rotation plane, with a downwind direction as a positive direction. The edge-wise direction may be understood as a direction parallel to the rotor rotation plane, with a clockwise direction as a positive direction. The rotor-hub coordinate system refers to a coordinate system whose origin is located at a hub center and rotates with the rotor, and an X-axis of which coincides with a rotation axis of the rotor. The element coordinate system refers to a coordinate system for a blade section after deformation, which is obtained through a finite number of rotations from an initial state, with the Z-axis always perpendicular to the blade section.

In the embodiments of the present disclosure, sensors with an angular velocity acquisition function are mounted on the wind turbine, where a mounting manner of the sensors related to the quantity and mounting positions thereof may include but are not limited to: (1) a first sensor being mounted on the blade root of the wind turbine, and (2) at least one second sensor being mounted on the blade of the wind turbine. In an embodiment, the mounting manner of the sensors related to the quantity and mounting positions thereof may further include: (3) a third sensor being mounted at the hub center of the wind turbine. The second sensor may be mounted near a position where the blade is likely to be deformed, such as the tip and/or middle of the blade. The more second sensors are mounted, the more basis can be provided for accurately determining the blade posture. The angular velocity acquired by the third sensor is used for more accurately determining the blade posture during a pitch process of the wind turbine. Determination of the blade posture may not rely on the angular velocity acquired by the third sensor when the wind turbine is not in the pitch process.

Description is provided with reference to an example in which the mounted sensors each with an angular velocity acquisition function are gyroscope sensors in the embodiments of the present disclosure. For example, as shown in FIG. 2, sensor No. 1 (that is, the third sensor) is mounted at the hub center, sensor No. 2 (that is, the first sensor) is mounted on an inner surface of the blade-root pitch circle, sensor No. 3 (that is, one second sensor) is mounted on an outer skin of the blade, and a mounting position of the sensor No. 3 in a spanwise direction is $l_1$. There is a transformation matrix A between the blade-root coordinate system and the blade-section coordinate system. Then, a transformation relationship between an angular velocity vector $\omega_E$ acquired by sensor No. 3 and an angular velocity vector $\overline{\omega}_{BR}$ acquired by sensor No. 2 can be expressed as: $\omega_E = A\overline{\omega}_{BR}$. In an embodiment, on the blade of the wind turbine, sensor No. 4 (i.e., another second sensor) may be further included. A mounting position of the sensor No. 4 in the spanwise direction is $l_2$, and the determination of $l_1$ and $l_2$ is associated with respective blade-section positions.

It should be noted that the entity implementing the method for determining the blade posture of the wind turbine may be a system for determining a blade posture of a wind turbine provided by an embodiment of the present disclosure, such as a controller in the system for determining the blade posture of the wind turbine. The controller may be carried in an electronic device or a functional module of an electronic device. The electronic device mentioned above may be any device capable of implementing the method for determining the blade posture of the wind turbine in the embodiments of the present disclosure.

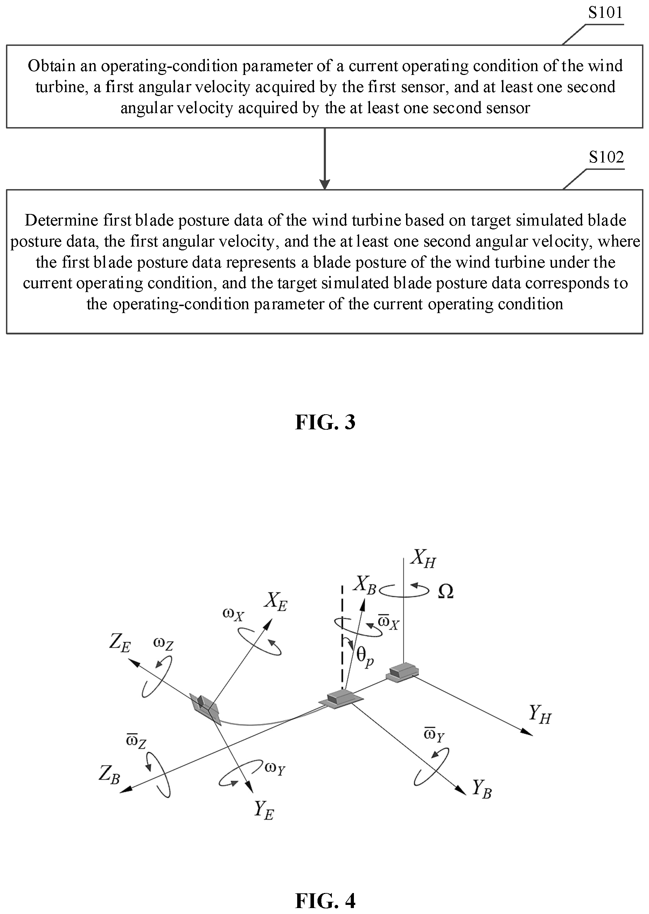

FIG. 3 is a flowchart of a method for determining a blade posture of a wind turbine according to an embodiment of the present disclosure. The method may be applied to a system for determining a blade posture of a wind turbine. In the method, a first sensor is arranged on a blade root of the wind turbine, referring to the sensor No. 2 in FIG. 2, and at least one second sensor is arranged on a blade of the wind turbine, referring to the sensor No. 3 in FIG. 2.

As shown in FIG. 3, the method may include step S101 to step S102.

In step S101, an operating-condition parameter of a current operating condition of the wind turbine, a first angular velocity acquired by the first sensor, and at least one second angular velocity acquired by the at least one second sensor are obtained.

The operating-condition parameter of the current operating condition of the wind turbine may include at least one of the following parameters: a wind speed, a rotational speed, or a pitch angle. Alternatively, the operating-condition parameter of the current operating condition may further include power determined based on a directly acquired operating-condition parameter (at least one of the wind speed, the rotational speed, or the pitch angle).

The first sensor or the second sensor may be any sensor with an angular velocity acquisition function, such as a gyroscope or an inertial navigation sensor.

The first sensor and the second sensor may be mounted on a skin or a web of the blade. The skin may be an outer-surface skin or an inner-surface skin. The skin may be understood as a composite material reinforcement layer that maintains a geometric shape of the blade, which provides an aerodynamic shape and bears most of the shear load. The web may be, for example, a shear web, as shown in FIG. 2.

The first sensor and the second sensor may be mounted on the blade by pasting or bolt fastening, or by means of a shimming block. In a case that a sensor is mounted using a shimming block, since the sensor is not directly connected to the blade, an angle of the shimming block needs to be known and taken into account in the determining of the blade posture, to ensure the finally determined blade posture is accurate.

The mounting position of the second sensor on the blade includes at least one of the following positions: a tip position of the blade or a middle position of the blade. It is typically determined to mount the second sensor at a position adjacent to a position where the blade is likely to be deformed. Moreover, under an identical condition, the more second sensors are mounted, the more basis can be provides for accurately determining the blade posture. The mounting position determined for the second sensor is required to ensure mounting stability of the second sensor. For example, a position with a curvature being less than a preset value on the blade may be determined for mounting the second sensor.

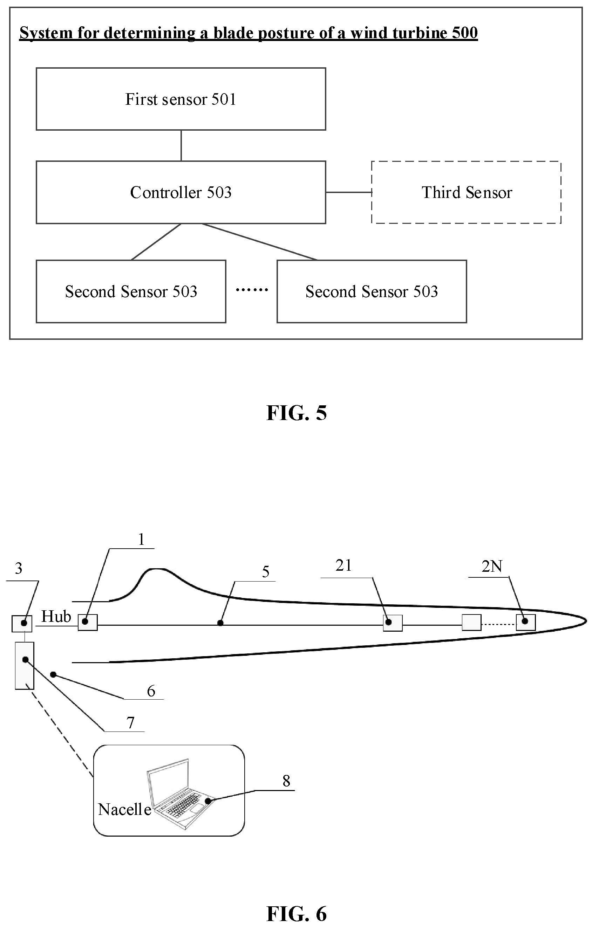

In specific implementation, an interaction manner between the first sensor and the controller in the system for determining the blade posture of the wind turbine may include a wired manner and a wireless manner. That is, obtaining angular velocities acquired by the first sensor and the second sensor in step S101 may be performed in a wired or a wireless manner. For related description of the system for determining the blade posture of the wind turbine, reference can be made to the embodiments shown in FIG. 5 to FIG. 7 below.

As an example, for the interaction in the wired manner, the obtaining a first angular velocity acquired by the first sensor and at least one second angular velocity acquired by the at least one second sensor in step S101 may include: first, sending, by the first sensor, the first angular velocity to a data acquisition system via a first data cable, and sending, by the second sensor, the second angular velocity to the data acquisition system via a second data cable; and then, sending, by the data acquisition system, the first angular velocity and the second angular velocity to the controller of the system for determining the blade posture of the wind turbine. The controller of the system for determining the blade posture of the wind turbine may be, for example, a computer system in a nacelle, such as a notebook computer system. Then, the data acquisition system may send the first angular velocity and the second angular velocity to the computer system in the nacelle via a wireless manner.

As another example, for the interaction in the wireless manner, each sensor is individually configured with a signal transmission unit (such as an antenna) and a power supply module. The obtaining the first angular velocity acquired by the first sensor and the at least one second angular velocity acquired by the at least one second sensor in step S101 may include: sending, by the first sensor, the first angular velocity to the controller of the system for determining the blade posture of the wind turbine through a first signal transmission unit, and sending, by the second sensor, the second angular velocity to the controller of the system for determining the blade posture of the wind turbine through a second signal transmission unit. The controller of the system for determining the blade posture of the wind turbine may be, for example, a computer system in a nacelle, such as a notebook computer system. Then, the first sensor and the second sensor may send the first angular velocity and the second angular velocity to the computer system in the nacelle via a wireless manner or via a network.

It can be seen that during the actual operation of the wind turbine, the operating-condition parameter under the current operating condition, the first angular velocity, and at least one second angular velocity are obtained through step S101, to prepare for determining the blade posture of the wind turbine under the current operating condition.

In step S102, first blade posture data of the wind turbine is determined based on target simulated blade posture data, the first angular velocity, and the at least one second angular velocity, where the first blade posture data represents a blade posture of the wind turbine under the current operating condition, and the target simulated blade posture data corresponds to the operating-condition parameter of the current operating condition.

To implement the method according to the embodiments of the present disclosure, it is necessary to obtain multiple pieces of simulated blade posture data under respective operating conditions in advance. In the multiple pieces of simulated blade posture data, each piece of the simulated blade posture data corresponds to an operating condition. After step S101, the target simulated blade posture data corresponding to the operating-condition parameter of the current operating condition may be determined from the multiple pieces of simulated blade posture data, thus providing a basis for resolving blade posture data under the current operating condition. For example, a maintenance form of the multiple pieces of simulated blade posture data may be a first mapping relationship (or a trajectory relationship) between simulated blade posture data and an operating-condition parameter (that is, at least one of the wind speed, the rotational speed, and the pitch angle). Then, based on the operating-condition parameter of the current operating condition (that is, at least one of the wind speed, the rotational speed, and the pitch angle, which corresponds to the operating-condition parameter when the simulated blade posture data is obtained), a corresponding first mapping entry can be obtained from the maintained first mapping relationship by matching, and thereby simulated blade posture data in the corresponding first mapping entry is read, which is recorded as the target simulated blade posture data. For another example, the maintenance form of the multiple pieces of simulated blade posture data may further be a second mapping relationship between simulated blade posture data and power. Then, in one case, the operating-condition parameter of the current operating condition obtained in step S101 is at least one of the wind speed, the rotational speed, or the pitch angle. The power corresponding to the current operating condition may be calculated based on the operating-condition parameter of the current operating condition, the corresponding second mapping entry can be obtained from the maintained second mapping relationship based on the power by matching, and thereby the simulated blade posture data in the corresponding second mapping entry is read, which is recorded as the target simulated blade posture data. In another case, the operating-condition parameter of the current operating condition obtained in step S101 is power. A corresponding second mapping entry may be obtained from the maintained second mapping relationship by matching based on the power, and thereby simulated blade posture data in the obtained second mapping entry is read, which is recorded as the target simulated blade posture data.

As an example, the process of determining the multiple pieces of simulated blade posture data described above may include: based on a structural parameter of the wind turbine, an aerodynamic parameter of the wind turbine, and operating-condition parameters of multiple operating conditions of the wind turbine, determining a piece of simulated blade posture data corresponding to each operating condition of the multiple operating conditions. The multiple pieces of simulated blade posture data may be understood as output of a simulation model. Input of the simulation model may be the structural parameter of the wind turbine, the aerodynamic parameter of the wind turbine, and the operating-condition parameters of the multiple operating conditions of the wind turbine. The simulation model may be used to calculate parameters such as displacement and element torsion angle of a blade section through a Finite Element Method and a Blade Element Momentum Theory, and output the piece of simulated blade posture data corresponding to each operating condition. The finite element method is a numerical technique for solving for an approximate solution of a boundary value problem of a partial differential equation. During solving, the entire problem region is subdivided, each obtained sub-region becomes a simple part, and this simple part is called a finite element. The blade element momentum theory refers to a solution method where there is a force balance between a momentum theory and a two-dimensional airfoil, such that a momentum equation is closed. The aerodynamic parameter may refer to a parameter representing aerodynamic performance of the wind turbine, such as a lift force, a drag force, and a pitch angle. The structural parameter may refer to a parameter representing a structure of the wind turbine, such as a torsional angle, a chord length, and airfoil-related coefficients.

The simulated blade posture data may be an initial transformation matrix, for example, a direction cosine matrix.

In some implementations, step S102, for example, may include: based on the target simulated blade posture data as well as the first angular velocity and the at least one second angular velocity, resolving the first blade posture data of the wind turbine.

As an example, it is assumed that the target simulated blade posture data is an initial transformation matrix $A_0$, where $A_0$ is a 3*3 matrix; the second angular velocity is represented as $\omega_E$, the first angular velocity is represented as $\overline{\omega}_{BR}$. According to a transformation relationship $\omega_E = A\overline{\omega}_{BR}$ between $\omega_E$ and $\overline{\omega}_{BR}$, the following equation (1) may be obtained:

$$\begin{pmatrix} \omega_X \\ \omega_Y \\ \omega_Z \end{pmatrix} = \begin{pmatrix} t_{11} & t_{12} & t_{13} \\ t_{21} & t_{22} & t_{23} \\ t_{31} & t_{32} & t_{33} \end{pmatrix} \begin{pmatrix} \overline{\omega}_X \\ \overline{\omega}_Y \\ \overline{\omega}_Z \end{pmatrix} \quad (1).$$

In equation (1), $t_{ij}$ (i,j = 1,2,3) is a coefficient in the direction cosine matrix, and equation (1) is re-arranged to obtain the following equation (2):

$$\begin{pmatrix} t_{11} & t_{12} & t_{13} \\ t_{21} & t_{22} & t_{23} \\ t_{31} & t_{32} & t_{33} \end{pmatrix} \begin{pmatrix} \overline{\omega}_X \\ \overline{\omega}_Y \\ \overline{\omega}_Z \end{pmatrix} - \begin{pmatrix} \omega_X \\ \omega_Y \\ \omega_Z \end{pmatrix} = \begin{pmatrix} 0 \\ 0 \\ 0 \end{pmatrix} \quad (2).$$

Based on an orthogonality condition of the transformation matrix, the equation is written out to obtain a following relationship of equations (3a) to (3f) among the coefficients in the direction cosine matrix:

$$t_{11}^2 + t_{12}^2 + t_{13}^2 - 1 = 0 \quad (3a),$$

$$t_{21}^2 + t_{22}^2 + t_{23}^2 - 1 = 0 \quad (3b),$$

$$t_{31}^2 + t_{32}^2 + t_{33}^2 - 1 = 0 \quad (3c),$$

$$t_{11} t_{21} + t_{12} t_{22} + t_{13} t_{23} = 0 \quad (3d),$$

$$t_{11} t_{31} + t_{12} t_{32} + t_{13} t_{33} = 0 \quad (3e),$$

$$t_{21} t_{31} + t_{22} t_{32} + t_{23} t_{33} = 0 \quad (3f),$$

Based on $A_0$, by solving the above nonlinear algebraic equations (2) and (3a) to (3f), the transformation matrix $A_{Re}$ shown in equation (4) below is obtained:

$$A_{\mathrm{Re}} = \begin{pmatrix} t_{11} & t_{12} & t_{13} \\ t_{21} & t_{22} & t_{23} \\ t_{31} & t_{32} & t_{33} \end{pmatrix} \quad (4).$$

This $A_{Re}$ is the first blade posture data in step S102, which is capable of representing the blade posture of the wind turbine under the current operating condition.

In some implementations, after step S102, in order to better express the blade posture under the current operating condition, the first blade posture data may be further processed to obtain data that is capable of accurately representing the blade posture.

As an example, after step S102, the method may further include: calculating an angle set based on the first blade posture data, where the angle set represents the blade posture of the wind turbine under the current operating condition.

For example, the first blade posture data is a first direction cosine matrix, and the first direction cosine matrix is a 3*3 matrix. Then, the angle set may include three Cardan angles or three Euler angles.

In response to the angle set including three Cardan angles: $\alpha_{Re}$, $\beta_{Re}$ and $\gamma_{Re}$, resolving results may be specifically expressed as the following (5a), (5b) and (5c):

$$\alpha_{Re} = \arctan\left(-\frac{A_{\mathrm{Re}}(2,3)}{A_{\mathrm{Re}}(3,3)}\right) \quad (5a),$$

$$\beta_{Re} = \arcsin\left(A_{\mathrm{Re}}(1,3)\right) \quad (5b),$$

$$\gamma_{Re} = \arctan\left(-\frac{A_{\mathrm{Re}}(1,2)}{A_{\mathrm{Re}}(1,1)}\right) \quad (5c).$$

In response to the angle set including three Euler angles: $\alpha_{Re}$, $\beta_{Re}$ and $\gamma_{Re}$, resolving results may be specifically expressed as the following (6a), (6b) and (6c):

$$\alpha_{Re} = \arccos\left(-\frac{A_{\mathrm{Re}}(2,3)}{\sin\beta_{Re}}\right) \quad (6a),$$

$$\beta_{Re} = \arccos\left(A_{\mathrm{Re}}(3,3)\right) \quad (6b),$$

$$\gamma_{Re} = \arccos\left(-\frac{A_{\mathrm{Re}}(3,2)}{\sin\beta_{Re}}\right) \quad (6c).$$

Here, $A_{Re}$ (i, j) indicates $t_{ij}$ in equation (4). For example, $A_{Re}$ (2, 3) indicates $t_{23}$ in equation (4)

As another example, after step S102, the method may further include: calculating a coordinate of the blade on a target axis (for example, X-axis) of the blade-root coordinate system based on the first blade posture data, where the coordinate represents the blade posture of the wind turbine under the current operating condition.

For example, the first blade posture data is a first direction cosine matrix, and the first direction cosine matrix is a 3*3 matrix. Then, the position of the blade on the X-axis in the blade-root coordinate system can be calculated by the following equation (7):

$$p_x = \sum_{i=1}^{N} \sin\left[ \arccos\left( A_{\mathrm{Re}}(1,1)_{i+1} \right) - \arccos\left( A_{\mathrm{Re}}(1,1)_i \right) \right] \times \left( l_{i+1} - l_i \right), \quad (i=1, \ldots, N) \quad (7),$$

where N is the number of second sensors.

It can be seen that in this method, by mounting multiple sensors on the blade of the wind turbine to acquire angular velocities at multiple points on the blade in real time, and based on the simulated blade posture data corresponding to the current operating condition in combination with the acquired angular velocities, the first blade posture data is calculated. The first blade posture data can accurately reflect the blade posture of the wind turbine under the current operating condition, solving the problem that the blade posture of the wind turbine cannot be conveniently and accurately determined currently. The accurate blade posture of the wind turbine enables more accurate and intelligent control of the wind turbine, providing reliable data foundation for better control of the wind turbine.

In some other implementations, the blade posture during the pitch process of the wind turbine is a matter that may be paid close attention to in a wind turbine control process. Therefore, the embodiments of the present disclosure may further include the process of determining the blade posture of the wind turbine during the pitching process. In this implementation, in addition to the aforementioned first sensor and second sensor, a third sensor may also be arranged on the hub of the wind turbine. During the pitch process of the wind turbine, the method further includes: step S103, obtaining a third angular velocity acquired by the third sensor under the current operating condition of the wind turbine; step S104, determining a pitch angle based on the first angular velocity and the third angular velocity; and step S105, determining second blade posture data based on the first blade posture data and the pitch angle, where the second blade posture data represents the blade posture of the wind turbine during the pitching process under the current operating condition.

The third sensor may be mounted at a position on a hub surface of the wind turbine where a sensor can be mounted. For example, the third sensor may be mounted at the hub center of the wind turbine.

A specific implementation of step S103 may refer to the related description of the acquisition process of the first angular velocity and the second angular velocity in step S101.

As an example, in response to the first blade posture data being a first direction cosine matrix, the step S104 may include: first determining a second direction cosine matrix $A_P$ based on the first angular velocity and the third angular velocity, and then solving for the pitch angle $\theta_p$ based on $A_P$. In this example, the second blade posture data obtained in step S105 may be a posture angle of the blade.

For example, referring to FIG. 4, during the pitching process of the blade, as the pitch angle $\theta_p$ changes, the first angular velocity of the first sensor also changes. The third angular velocity is represented as $\overline{\omega}_H$, and the first angular velocity is represented as $\overline{\omega}_{BR}$, where $\overline{\omega}_H = (\Omega\,0\,0)^\mathrm{T}$, $\overline{\omega}_{BR} = (\overline{\omega}_X, \overline{\omega}_Y\,\overline{\omega}_Z)^\mathrm{T}$, a transformation relationship between $\overline{\omega}_H$ and $\overline{\omega}_{BR}$ may be expressed as $\overline{\omega}_{BR} = A_p\overline{\omega}_H$, where

$$\mathbf{A}_p = \begin{pmatrix} \cos(\theta_p) & -\sin(\theta_p) & 0 \\ \sin(\theta_p) & \cos(\theta_p) & 0 \\ 0 & 0 & 1 \end{pmatrix}.$$

Then, based on the above transformation relationship, $\theta_p$ may be derived. It should be noted that when the wind turbine does not reach a rated power, pitching is not performed, $\theta_p = 0°$.

In this example, the position of the blade on the X-axis of the blade-root coordinate system may be expressed as:

$$p_x = \sum_{i=1}^{N} \sin\left[ \arccos\left( A_{\mathrm{Re}}(1,1)_{i+1} \right) - \arccos\left( A_{\mathrm{Re}}(1,1)_i \right) \right] \times \left( l_{i+1} - l_i \right), \quad (i=1, \ldots, N) \quad (8),$$

where N is the number of sensors. The torsional deformation of the blade in the blade-root coordinate system may be represented by a posture angle, and the posture angle may be expressed as:

$$\phi_z = \arccos\left( A_{\mathrm{Re}}(2,2) \right) - \theta_p \quad (9).$$

It can be seen that in the method according to the embodiments of the present disclosure, not only multiple second sensors are mounted on the blade of the wind turbine, but also a third sensor is mounted at the hub center. By acquiring the angular velocities at multiple points of the wind turbine through the sensors in real time, it is possible to derive the first blade posture data which can accurately reflect the blade posture of the wind turbine under the current operating condition based on the simulated blade posture data corresponding to the current operating condition in combination with the acquired angular velocities; and it is also possible to determine the second blade posture data that can accurately reflect the blade posture of the wind turbine during the pitching process under the current operating condition based on the first blade posture data and the third angular velocity acquired by the third sensor during the pitch process of the wind turbine. The problem that the blade posture of the wind turbine cannot be conveniently and accurately determined currently is solved, enabling intelligent control of the wind turbine. Furthermore, by using the method, it may further control or adjust a subsystem (for example, a pitch subsystem) of the wind turbine based on the second blade posture data.

In some other implementations, after step S102, in order to ensure the accuracy of the first blade posture data on which wind turbine control is based, the method may further include: verifying the first blade posture data based on verification data to obtain a verification result, where the verification result indicates whether the first blade posture data accurately represents the blade posture of the wind turbine under the current operating condition.

As an example, when the first blade posture data is a first direction cosine matrix, the verification data may be a verification direction cosine matrix calculated based on configured Cardan angles or Euler angles.

In response to the configured Cardan angles being $\alpha$, $\beta$ and $\gamma$ respectively, then a rotation matrix may be obtained as follows:

$$\mathbf{Tr}_1 = \begin{pmatrix} \cos(\alpha) & -\sin(\alpha) & 0 \\ \sin(\alpha) & \cos(\alpha) & 0 \\ 0 & 0 & 1 \end{pmatrix},$$

$$\mathbf{Tr}_2 = \begin{pmatrix} \cos(\beta) & 0 & \sin(\beta) \\ 0 & 1 & 0 \\ -\sin(\beta) & 0 & \cos(\beta) \end{pmatrix},$$

$$\mathbf{Tr}_3 = \begin{pmatrix} \cos(\gamma) & -\sin(\gamma) & 0 \\ \sin(\gamma) & \cos(\gamma) & 0 \\ 0 & 0 & 1 \end{pmatrix}.$$

The verification direction cosine matrix may be expressed as $A = Tr_1 Tr_2 Tr_3$.

In response to the configured Euler angles being $\alpha$, $\beta$ and $\gamma$ respectively, then a rotation matrix may be obtained as follows:

$$\mathbf{Tr}_1 = \begin{pmatrix} \cos(\alpha) & -\sin(\alpha) & 0 \\ \sin(\alpha) & \cos(\alpha) & 0 \\ 0 & 0 & 1 \end{pmatrix},$$

$$\mathbf{Tr}_2 = \begin{pmatrix} 1 & 0 & 0 \\ 0 & \cos(\beta) & \sin(\beta) \\ 0 & -\sin(\beta) & \cos(\beta) \end{pmatrix},$$

$$\mathbf{Tr}_3 = \begin{pmatrix} \cos(\gamma) & -\sin(\gamma) & 0 \\ \sin(\gamma) & \cos(\gamma) & 0 \\ 0 & 0 & 1 \end{pmatrix}.$$

The verification direction cosine matrix may be expressed as $A = Tr_1 Tr_2 Tr_3$.

The verification process may be understood, for example, as: comparing a verification direction cosine matrix A and the first direction cosine matrix $A_{Re}$ and determining whether a difference between the verification direction cosine matrix A and the first direction cosine matrix $A_{Re}$ is less than a preset difference threshold. In response to the difference being less than the preset difference threshold, it is determined that the verification result indicates that the first blade posture data accurately represents the blade posture of the wind turbine under the current operating condition. In response to the difference being not less than the preset difference threshold, it is determined that the verification result indicates that the first blade posture data does not represent the blade posture of the wind turbine under the current operating condition.

It can be seen that the method not only provides a process for conveniently determining a blade posture, but also verifies whether the obtained first blade posture data accurately represents the blade posture, which enables more reliable and intelligent subsequent control of the wind turbine based on the blade posture.

Correspondingly, a system 500 for determining a blade posture of a wind turbine is provided according to an embodiment of the present disclosure. Referring to FIG. 5, the system 500 may at least include: a first sensor 501, at least one second sensor 502, and a controller 503. The first sensor 501 is arranged on a blade root of the wind turbine, and the at least one second sensor 502 is arranged on a blade of the wind turbine.

The first sensor 501 is configured to acquire a first angular velocity under a current operating condition of the wind turbine.

The at least one second sensor 502 is configured to acquire at least one second angular velocity under the current operating condition;

The controller 501 is configured to perform the aforementioned method embodiments to determine the blade posture of the wind turbine.

For example, the controller 501 is configured to obtain an operating-condition parameter of a current operating condition of the wind turbine, a first angular velocity acquired by the first sensor, and at least one second angular velocity acquired by the at least one second sensor, where the operating-condition parameter comprises at least one of: a wind speed, a rotational speed, or a pitch angle;

The controller 501 is specifically configured to determine first blade posture data of the wind turbine based on target simulated blade posture data, the first angular velocity, and the at least one second angular velocity, where the first blade posture data represents a blade posture of the wind turbine under the current operating condition, and the target simulated blade posture data corresponds to the operating-condition parameter of the current operating condition.

Optionally, the controller 501 is further configured to determine the target simulated blade posture data corresponding to the operating-condition parameter of the current operating condition from a plurality pieces of simulated blade posture data, where each piece of simulated blade posture data in the plurality pieces of simulated blade posture data corresponds to one operating condition.

Optionally, the controller 501 is further configured to determine a piece of simulated blade posture data corresponding to each operating condition in a plurality pieces operating conditions based on a structural parameter of the wind turbine, an aerodynamic parameter of the wind turbine, and operating-condition parameters of the plurality pieces operating conditions of the wind turbine.

Optionally, the controller 501 is further configured to calculate an angle set based on the first blade posture data, wherein the angle set represents the blade posture of the wind turbine under the current operating condition; or calculate a coordinate of the blade on a target axis of a blade-root coordinate system based on the first blade posture data, wherein the coordinate represents the blade posture of the wind turbine under the current operating condition.

Optionally, the system 500 further includes a third sensor mounted on a hub of the wind turbine. During the pitch process of the wind turbine, the controller 501 is further configured to:

obtain a third angular velocity acquired by the third sensor under the current operating condition of the wind turbine;
determine a pitch angle based on the first angular velocity and the third angular velocity; and
determine second blade posture data based on the first blade posture data and the pitch angle, where the second blade posture data represent a blade posture of the wind turbine during the pitching process under the current operating condition.

Optionally, the controller 501 is further configured to:

obtain verification data;
verify the first blade posture data based on the verification data to obtain a verification result, where the verification result indicates whether the first blade posture data accurately represents the blade posture of the wind turbine under the current operating condition.

Optionally, the controller 501 is configured to:

receive the first angular velocity and the at least one second angular velocity sent by a data acquisition system of the wind turbine, where the data acquisition system is connected to the first sensor and the at least one second sensor respectively via a data cable;

or receive the first angular velocity sent by the first sensor, and receiving the at least one second angular velocity sent by the at least one second sensor, where the first sensor and the at least one second sensor each comprises a signal transmission unit.

Optionally, the second sensor is mounted on a skin or a web of the blade.

Optionally, a mounting position of the second sensor on the blade includes at least one of the following positions: a tip position of the blade or a middle position of the blade.

Optionally, the first blade posture data is a first direction cosine matrix, and the angle set includes three Cardan angles or three Euler angles.

Optionally, the first blade posture data is a first direction cosine matrix, and the second blade posture data is a posture angle of the blade.

Optionally, the first blade posture data is a first direction cosine matrix, and the verification data is a verification direction cosine matrix calculated based on configured Cardan angles or Euler angles.

Optionally, the controller 501 is further configured to control one or more subsystems of the wind turbine based on the first blade posture data, for example, control one or more subsystems of the wind turbine to implement a shutdown operation.

Optionally, the controller 501 is further configured to control or adjust a subsystem (for example, a pitch subsystem) of the wind turbine based on the second blade posture data.

As an example, FIG. 6 is a schematic diagram of a wind turbine blade with sensors being mounted on the wind turbine in a wired manner. FIG. 6 illustrates a gyroscope sensor 3 (corresponding to the third sensor herein) mounted at a hub, a gyroscope sensor 1 (corresponding to the first sensor herein) mounted at a blade-root position, a gyroscope sensor 21 (corresponding to one second sensor herein) mounted at a middle position of a blade, a gyroscope sensor 2N (corresponding to another second sensor herein) mounted at a tip position of the blade, where N is an integer greater than or equal to 1, as well as a signal transmission cable 5, the hub 6, a data acquisition system 7, and a computer system 8. The computer system 8 may be, for example, a notebook computer system 8. The wired manner means that each sensor is connected to the data acquisition system 7 via a cable, and the data acquisition system 7 transmits an acquired signal to the computer system 8 in a nacelle via a wireless transmission manner such as wifi, or stores the acquired signal via a memory card for local storage. The sensor 3 is mounted on the hub, and the sensor 1 is mounted at the blade root. On the blade, from the blade root along a spanwise direction, sensor numbers increase from 21 to 2N. The data acquisition system 7 may also supply power to each sensor.

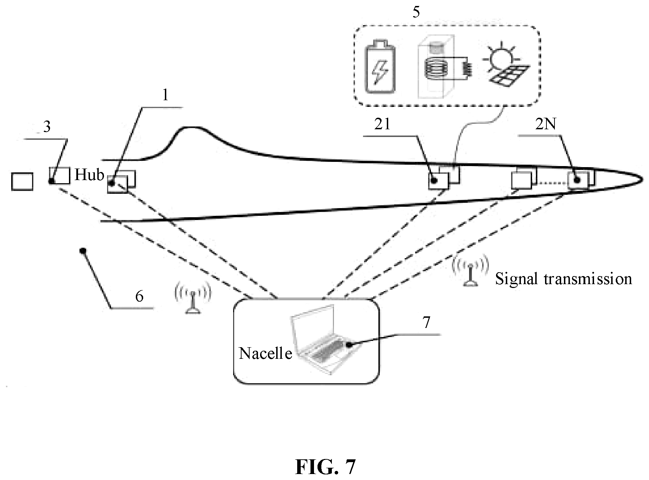

As another example, FIG. 7 is a schematic diagram of a wind turbine blade with sensors being in wireless communication. FIG. 7 illustrates a gyroscope sensor 3 (corresponding to the third sensor herein) mounted at a hub, a gyroscope sensor 1 (corresponding to the first sensor herein) mounted at a blade-root position, a gyroscope sensor 21 (corresponding to one second sensor herein) mounted at a middle position of a blade, a gyroscope sensor 2N (corresponding to another second sensor herein) mounted at a tip position of the blade, a power supply module 5, the hub 6, and a computer system 7. The computer system 7 may be, for example, a notebook computer system 7. In a wireless connection scenario, each sensor is individually configured with a signal transmission unit and a power supply module 5. The signal transmission unit (for example, an antenna) transmits a signal acquired by the sensor via a wireless manner or via a network to the computer system 7 located in a nacelle. The power supply module 5 of each sensor is configured to store a certain amount of electrical energy to supply power to the sensor and the signal transmission unit of the sensor. The power supply module 5 may, for example, be: a solar cell film attached to an outer skin surface of the blade, or a magnet-coil system or a battery pack mounted on an inner surface or an outer surface of the blade. The solar cell film may be pasted on a pressure side of the blade near a trailing edge to reduce an aerodynamic impact on the wind turbine blade. The magnet-coil system may be mounted along a chordwise direction of the blade. When the blade rotates for one circle, the magnet inside the magnet-coil system will pass through the coil under gravity, thus generating an induced current and charging a capacitor. A battery pack may provide electrical energy for data acquisition and signal transmitting for a certain period, but is required to be replaced regularly.

It should be noted that the specific implementation of and the technical effects achieved by the system 500 may be referred to the related description in the method according to the embodiments of the present disclosure.

In addition, a controller is further provided according to an embodiment of the present disclosure. The controller can be configured to interact with sensors on the wind turbine and perform the method according to the embodiments of the present disclosure to determine the blade posture of the wind turbine. The sensors on the wind turbine at least include the first sensor and the second sensor mentioned in the above method embodiments, and may further include a third sensor.

In addition, a computer readable storage medium is provided according to an embodiment of the present disclosure. The computer readable storage medium is configured to store a computer program. The computer program is executed to perform the method according to the embodiments of the present disclosure.

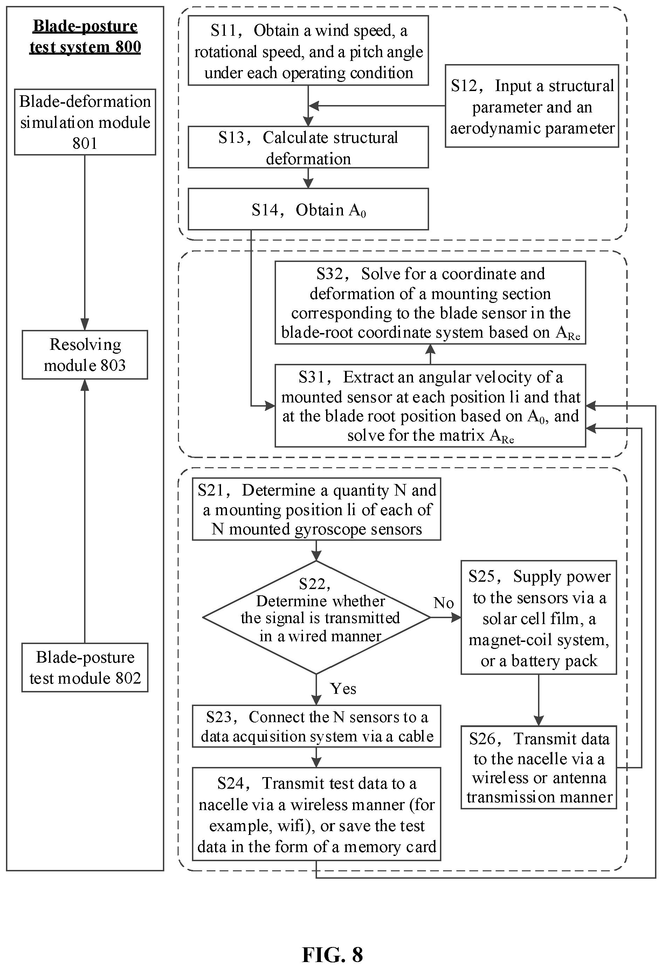

To make the technical solution according to the embodiments of the present disclosure clearer, a specific scenario implementation is further given in conjunction with FIG. 8. As shown in FIG. 8, the method for determining a blade posture of a wind turbine in the embodiment of the present disclosure may also be implemented by a blade-posture test system 800 according to an embodiment of the present disclosure. The system 800 may include: a blade-deformation simulation module 801, a blade-posture test module 802 and a resolving module 803.

The blade-deformation simulation module 801 is mainly configured to: estimate blade deformation; input a theoretical aerodynamic parameter, a structural parameter and operating-condition parameters of respective operating conditions into a calculation model, to calculate parameters such as displacement and element torsion angle of a blade section through a finite element method and a blade element momentum theory; and output an initial direction cosine matrix (also called an initial transformation matrix) $A_0$.

The blade-posture test module 802 is mainly configured to: perform data acquisition and data transmission of sensors, which may, for example, include sensor-quantity determination, mounting-position determination, signal-transmission method determination, and data-storage method determination. The specific implementation of the blade-posture test module 802 may refer to the related description of step S101 above.

The resolving module 803 is mainly configured to: based on $A_0$, process test data, reconstruct a direction cosine matrix $A_{Re}$, to calculate a spatial position and torsional deformation at each section position of the blade.

The blade-deformation simulation module 801 is further configured to perform steps including: step S11, obtaining a wind speed, a rotational speed, and a pitch angle under each operating condition; step S12, inputting a structural parameter and an aerodynamic parameter; step S13, calculating structural deformation; and step S14, obtaining $A_0$.

The blade-posture test module 802 is further configured to perform steps including: step S21, determining a quantity N and a mounting position li of each of N mounted gyroscope sensors; step S22, determining whether the signal is transmitted in a wired manner, and in response to the signal being transmitted in the wired manner, performing step S23 to step S24; and in response to the signal being not transmitted in the wired manner, performing step S25 to step S26; step S23, connecting the N mounted sensors to a data acquisition system via a cable; step S24, transmitting test data to a nacelle via a wireless manner (for example, wifi), or storing the test data in the form of a memory card; step S25, supplying power to the N mounted sensors via a solar cell film, a magnet-coil system, or a battery pack; and step S26, transmitting data to the nacelle via a wireless transmission manner (for example, wifi or antenna).

The resolving module 803 is further configured to perform steps including: step S31, extracting an angular velocity of a mounted sensor at each position li and that at the blade root position based on $A_0$, and solving for the matrix $A_{Re}$; and step S32, solving for a coordinate and deformation of a mounting section corresponding to the blade sensor in the blade-root coordinate system based on $A_{Re}$.

For example, assuming that the blade undergoes continuous rotation, which is described by Cardan angles as $\alpha = 2°, \beta = 25°, y = -5°$, the direction cosine matrix A of the blade may be expressed as:

$$\mathbf{A} = \begin{pmatrix} 0.9028 & 0.07898 & 0.4226 \\ -0.0724 & 0.9968 & -0.0316 \\ -0.4237 & -0.0020 & 0.9057 \end{pmatrix}.$$

Through simulation, the estimated direction cosine matrix $A_0$ of the blade may be expressed as:

$$\mathbf{A}_0 = \begin{pmatrix} 0.9659 & 0 & 0.2588 \\ 0 & 1 & 0 \\ -0.2588 & 0 & 0.9659 \end{pmatrix}.$$

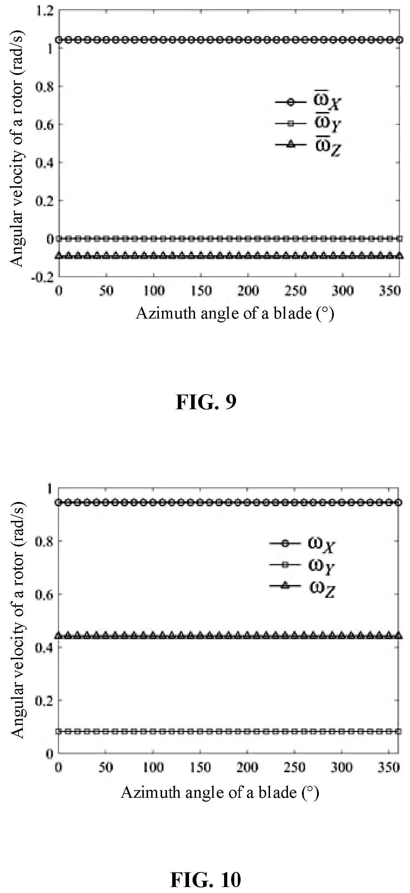

For a blade with a length of 90 meters, it is assumed that operating-condition parameters of a wind turbine under a current operating condition include: a wind speed of 8 meters per second (m/s), a rotational speed of 10 revolutions per minute (rpm), and a pitch angle of 0 degrees (°). A gyroscope sensor 1 is mounted at a blade root, and a gyroscope sensor 2 is mounted at a 70m position in a spanwise direction on the blade. A measured value of the gyroscope sensor 1 is $\overline{\omega} = (1.0432, 0, -0.0913)^T$, and a measured value of gyroscope sensor 2 is $\omega = (0.9804, 0.0827, 0.3585)\ T$. FIG. 9 shows variation patterns of angular velocities of the gyroscope sensor 1 mounted at the blade root with an azimuth angle on three axes. FIG. 10 shows variation patterns of angular velocities of the gyroscope sensor 2 mounted at a blade section with an azimuth angle on three axes. Based on the matrix $A_0$, a reconstructed matrix $A_{Re}$ obtained through resolving may be expressed as:

$$\mathbf{A}_{\mathrm{Re}} = \begin{pmatrix} 0.9028 & 0.0789 & 0.4226 \\ -0.0841 & 0.9964 & -0.0064 \\ -0.4216 & -0.0297 & 0.9062 \end{pmatrix}.$$

$A_{Re}$ may represent the blade posture. Optionally, Cardan angles $\alpha_{Re} = 0.142°, \beta_{Re} = 25°, \gamma_{Re} = -5°$ may be obtained through back-calculation by using the reconstructed matrix $A_{Re}$.

It should be noted that A may be used as verification data of $A_{Re}$ to verify whether $A_{Re}$ can accurately represent the blade posture. Similarly, $\alpha = 2°, \beta = 25°, \gamma = -5°$ may also be used as verification data of $\alpha_{Re} = 0.142°, \beta_{Re} = 25°, \gamma_{Re} = -5°$ to verify whether $\alpha_{Re} = 0.142°, \beta_{Re} = 25°, \gamma_{Re} = -5°$ can accurately represent the blade posture.

It can be seen that through this embodiment, the blade posture of the wind turbine can be conveniently and accurately determined, providing reliable basis for wind turbine control.

From the above embodiments, those skilled in the art can clearly appreciate that all or a part of steps in the method according to the above embodiments may be implemented by means of software and a universal hardware platform. Based on such understanding, technical solutions of the present disclosure may be embodied as a software product. The computer software product may be stored in a storage medium, such as a read-only memory (ROM)/RAM, a magnetic disc, or an optical disk, etc. The computer software product includes multiple instructions for enabling a computer device (which may be a personal computer, a server, or a network communication device such as a router) to perform the methods described in various embodiments or some parts of the embodiments of the present disclosure.

The embodiments are described in this specification in a progressive manner. Various embodiments may refer to each other for the same or similar parts, and each embodiment places emphasis on the difference from other embodiments. Particularly, since the system embodiments and the device embodiments are substantially similar to the method embodiments, the system embodiments and the device embodiments are described briefly, and for relevant parts, reference may be made to the description of the method embodiments. The device and system embodiments described above are only illustrative. The modules described as separate components may be or may not be separated physically, and the components shown as modules may be or may not be physical modules, that is, the components may be located at the same position or may be distributed onto multiple network units. Some or all of the modules may be selected as needed to achieve the objective of the solution of the embodiments. Those skilled in the art can understand and implement the present disclosure without creative effort.

The foregoing descriptions are only exemplary embodiments of the present disclosure but are not intended to limit the protection scope of the present disclosure. It should be noted that, for those skilled in the art, various improvements or modifications may be made without departing the present disclosure, such improvements or modifications are included within the protection scope of the present disclosure.

## Claims

1. A method for determining a blade posture of a wind turbine, wherein a first sensor is arranged on a blade root of the wind turbine, and at least one second sensor is arranged on a blade of the wind turbine, and the method comprises:

   obtaining an operating-condition parameter of a current operating condition of the wind turbine, a first angular velocity acquired by the first sensor, and at least one second angular velocity acquired by the at least one second sensor, wherein the operating-condition parameter comprises at least one of: a wind speed, a rotational speed, or a pitch angle; and
   determining first blade posture data of the wind turbine based on target simulated blade posture data, the first angular velocity, and the at least one second angular velocity, wherein the first blade posture data represents a blade posture of the wind turbine under the current operating condition, and the target simulated blade posture data corresponds to the operating-condition parameter of the current operating condition.

2. The method according to claim 1, further comprising:
   determining the target simulated blade posture data corresponding to the operating-condition parameter of the current operating condition from a plurality pieces of simulated blade posture data, wherein each piece of simulated blade posture data in the plurality pieces of simulated blade posture data corresponds to one operating condition.

3. The method according to claim 2, wherein a process of determining the plurality pieces of simulated blade posture data comprises:
   determining a piece of simulated blade posture data corresponding to each operating condition in a plurality pieces operating conditions based on a structural parameter of the wind turbine, an aerodynamic parameter of the wind turbine, and operating-condition parameters of the plurality pieces operating conditions of the wind turbine.

4. The method according to any one of claims 1 to 3, further comprising:

calculating an angle set based on the first blade posture data, wherein the angle set represents the blade posture of the wind turbine under the current operating condition; or
calculating a coordinate of the blade on a target axis of a blade-root coordinate system based on the first blade posture data, wherein the coordinate represents the blade posture of the wind turbine under the current operating condition.

5. The method according to any one of claims 1 to 3, wherein a third sensor is arranged on a hub of the wind turbine, and during a pitch process of the wind turbine, the method further comprises:

obtaining a third angular velocity acquired by the third sensor under the current operating condition of the wind turbine;
determining a pitch angle based on the first angular velocity and the third angular velocity; and
determining second blade posture data based on the first blade posture data and the pitch angle, wherein the second blade posture data represent a blade posture of the wind turbine during the pitching process under the current operating condition.

6. The method according to any one of claims 1 to 3, further comprising:

obtaining verification data; and
verifying the first blade posture data based on the verification data to obtain a verification result, wherein the verification result indicates whether the first blade posture data accurately represents the blade posture of the wind turbine under the current operating condition.

7. The method according to any one of claims 1 to 3, wherein the obtaining a first angular velocity acquired by the first sensor, and at least one second angular velocity acquired by the at least one second comprises:

receiving the first angular velocity and the at least one second angular velocity sent by a data acquisition system of the wind turbine, wherein the data acquisition system is connected to the first sensor and the at least one second sensor respectively via a data cable;
or receiving the first angular velocity sent by the first sensor, and receiving the at least one second angular velocity sent by the at least one second sensor, wherein the first sensor and the at least one second sensor each comprises a signal transmission unit.

8. The method according to any one of claims 1 to 3, wherein the second sensor is mounted on a skin or a web of the blade.

9. The method according to any one of claims 1 to 3, wherein a mounting position of the second sensor on the blade comprises at least one of: a tip position of the blade or a middle position of the blade.

10. The method according to claim 4, wherein the first blade posture data is a first direction cosine matrix, and the angle set comprises three Cardan angles or three Euler angles.

11. The method according to claim 5, wherein the first blade posture data is a first direction cosine matrix, and the second blade posture data is a posture angle of the blade.

12. The method according to claim 6, wherein the first blade posture data is a first direction cosine matrix, and the verification data is a verification direction cosine matrix calculated based on configured Cardan angles or Euler angles.

13. The method according to any one of claims 1 to 3, further comprising:
controlling a subsystem of the wind turbine based on the first blade posture data.

14. A system for determining a posture of a wind turbine blade, wherein the system comprises a first sensor, at least one second sensor, and a controller, wherein the first sensor is arranged on a blade root of a wind turbine, and the at least one second sensor is arranged on a blade of the wind turbine,

the first sensor is configured to acquire a first angular velocity under a current operating condition of the wind turbine;
the at least one second sensor is configured to acquire at least one second angular velocity under the current operating condition; and
the controller is configured to perform the method according to any one of claims 1 to 13.

15. The system according to claim 14, wherein the system further comprises a third sensor, the third sensor is arranged on a hub of the wind turbine, and
the third sensor is configured to acquire a third angular velocity under the current operating condition.

16. A computer readable storage medium, wherein the computer readable storage medium is configured to store a computer program, wherein the computer program is executed to perform the method according to any one of claims 1 to 13.

**FIG. 1**

**FIG. 2**

S101

Obtain an operating-condition parameter of a current operating condition of the wind turbine, a first angular velocity acquired by the first sensor, and at least one second angular velocity acquired by the at least one second sensor

S102

Determine first blade posture data of the wind turbine based on target simulated blade posture data, the first angular velocity, and the at least one second angular velocity, where the first blade posture data represents a blade posture of the wind turbine under the current operating condition, and the target simulated blade posture data corresponds to the operating-condition parameter of the current operating condition

**FIG. 3**

**FIG. 4**

**FIG. 5**

**FIG. 6**

**FIG. 7**

**Blade-posture test system 800**

Blade-deformation simulation module 801

Resolving module 803

Blade-posture test module 802

S11, Obtain a wind speed, a rotational speed, and a pitch angle under each operating condition

S12, Input a structural parameter and an aerodynamic parameter

S13, Calculate structural deformation

S14, Obtain $A_0$

S32, Solve for a coordinate and deformation of a mounting section corresponding to the blade sensor in the blade-root coordinate system based on $A_{Re}$

S31, Extract an angular velocity of a mounted sensor at each position li and that at the blade root position based on $A_0$, and solve for the matrix $A_{Re}$

S21, Determine a quantity N and a mounting position li of each of N mounted gyroscope sensors

S22, Determine whether the signal is transmitted in a wired manner

No

S25, Supply power to the sensors via a solar cell film, a magnet-coil system, or a battery pack

Yes

S23, Connect the N sensors to a data acquisition system via a cable

S24, Transmit test data to a nacelle via a wireless manner (for example, wifi), or save the test data in the form of a memory card

S26, Transmit data to the nacelle via a wireless or antenna transmission manner

**FIG. 8**

**FIG. 9**

**FIG. 10**

## INTERNATIONAL SEARCH REPORT

| | International application No. |
| --- | --- |
| | **PCT/CN2024/108133** |

| A. | CLASSIFICATION OF SUBJECT MATTER |
| --- | --- |

F03D17/00(2016.01)i

According to International Patent Classification (IPC) or to both national classification and IPC

| B. | FIELDS SEARCHED |
| --- | --- |

Minimum documentation searched (classification system followed by classification symbols)

IPC:F03D

Documentation searched other than minimum documentation to the extent that such documents are included in the fields searched

Electronic data base consulted during the international search (name of data base and, where practicable, search terms used)

CNABS; VCN; VEN; DWPI; CNKI: 叶片, 翼, 姿态, 传感器, 角速度, 风速, 桨距, 当前, blade, vane, attitude, sensor, transducer, angular, velocity, wind speed, pitch, present, current

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116771614 A (BEIJING GOLDWIND SCIENCE & CREATION WINDPOWER EQUIPMENT CO., LTD.) 19 September 2023 (2023-09-19) description, paragraphs 56-183, and figures 1-10 | 1-16 |
| A | CN 109715940 A (SSB WIND SYSTEMS GMBH & CO KG) 03 May 2019 (2019-05-03) description, paragraphs 73-162, and figures 1-13 | 1-16 |
| A | EP 3553311 A1 (SENVION GMBH) 16 October 2019 (2019-10-16) entire document | 1-16 |
| A | JP 2022168363 A (MITSUBISHI HEAVY INDUSTRIES LTD.) 08 November 2022 (2022-11-08) entire document | 1-16 |
| A | WO 2011092032 A1 (LM GLASFIBER A/S et al.) 04 August 2011 (2011-08-04) entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 October 2024** | **24 October 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/108133**

| Patent document cited in search report | | | Publication date (day/month/year) | Patent family member(s) | | | Publication date (day/month/year) |
|---|---|---|---|---|---|---|---|
| CN | 116771614 | A | 19 September 2023 | None | | | |
| CN | 109715940 | A | 03 May 2019 | WO | 2018028987 | A1 | 15 February 2018 |
| | | | | EP | 3279470 | A1 | 07 February 2018 |
| | | | | EP | 3279470 | B1 | 03 November 2021 |
| | | | | JP | 2019526015 | A | 12 September 2019 |
| | | | | JP | 6845930 | B2 | 24 March 2021 |
| | | | | US | 2019226457 | A1 | 25 July 2019 |
| | | | | US | 11067061 | B2 | 20 July 2021 |
| EP | 3553311 | A1 | 16 October 2019 | DK | 3553311 | T3 | 23 January 2023 |
| | | | | PL | 3553311 | T3 | 20 February 2023 |
| | | | | EP | 3553311 | B1 | 02 November 2022 |
| | | | | ES | 2936122 | T3 | 14 March 2023 |
| | | | | DE | 102018002982 | A1 | 17 October 2019 |
| JP | 2022168363 | A | 08 November 2022 | JP | 2023055788 | A | 18 April 2023 |
| | | | | JP | 7419580 | B2 | 22 January 2024 |
| | | | | JP | 2022168865 | A | 08 November 2022 |
| | | | | JP | 7438288 | B2 | 26 February 2024 |
| | | | | JP | 7245866 | B2 | 24 March 2023 |
| WO | 2011092032 | A1 | 04 August 2011 | DK | 2531722 | T3 | 25 November 2019 |
| | | | | US | 2012292905 | A1 | 22 November 2012 |
| | | | | US | 9353727 | B2 | 31 May 2016 |
| | | | | EP | 2531722 | A1 | 12 December 2012 |
| | | | | EP | 2531722 | B1 | 21 August 2019 |
| | | | | ES | 2757701 | T3 | 29 April 2020 |
| | | | | EP | 2354538 | A1 | 10 August 2011 |

Form PCT/ISA/210 (patent family annex) (July 2022)

## REFERENCES CITED IN THE DESCRIPTION

**Patent documents cited in the description**

- CN 202310953423